# EUROPÄISCHE PATENTSCHRIFT

(11) **EP 2 132 420 B1**
(45) Veröffentlichungstag und Bekanntmachung des Hinweises auf die Patenterteilung: **27.06.2012**
(21) Anmeldenummer: 07819471.9
(22) Anmeldetag: 31.10.2007
(51) Int. Cl.: F01N 3/36, F01N 3/20

(54) **INJEKTOR UND SYSTEM ZUM DOSIEREN VON REDUKTIONSMITTEL**
INJECTOR AND SYSTEM FOR DOSING REDUCING AGENT
INJECTEUR ET SYSTÈME POUR LE DOSAGE D'AGENT DE RÉDUCTION

(30) Priorität: 14.11.2006 DE 102006053558
(43) Veröffentlichungstag der Anmeldung: 16.12.2009
(73) Patentinhaber: Eberspächer Unna GmbH & Co. KG, 59423 Unna (DE)
(72) Erfinder: HUETHWOHL, Georg, 59494 Soest (DE); KASSEL, Armin, 58119 Hagen (DE); LUECKING, Christof, 58300 Wetter (DE); MAURER, Bernd, 58802 Balve (DE); NOACK, Frank, 58675 Hemer (DE)
(74) Vertreter: Diehl & Partner GbR
(86) Internationale Anmeldenummer: PCT/EP2007/009437
(87) Internationale Veröffentlichungsnummer: WO 2008/058635

(56) Entgegenhaltungen:
- WO-A-2004/030827
- WO-A-2007/124791
- DE-A1- 10 332 114
- DE-A1-102004 050 022
- DE-A1-102005 008 855

## Beschreibung

Die Erfindung betrifft einen Injektor zum Dosieren von Reduktionsmittel nach dem Oberbegriff des Anspruch 1 und ein System zum Dosieren von Reduktionsmittel nach dem Oberbegriff des Anspruchs 10.

Es ist bekannt, im Abgas von Dieselbrennkraftmaschinen enthaltene Stickoxide durch selektive katalytische Reduktion zu vermindern. Dazu wird vor einem SCR-Katalysator ein Reduktionsmittel, eine wässrige Harnstofflösung, fein zerstäubt in dosierter Menge in einen Abgastrakt der Dieselbrennkraftmaschine eingespritzt.

Aus der gattungsbildenden Offenlegungsschrift DE 103 32 114 A1 ist eine Vorrichtung zum Dosieren von Reduktionsmittel zum Abgas einer Brennkraftmaschine bekannt. Die Vorrichtung weist einen Injektor auf, dem ein Reduktionsmittel aus einem Vorratsbehälter über eine Zulaufleitung mittels einer Dosierpumpe zugeführt wird. Das Reduktionsmittel kann aus dem Injektor über eine Rücklaufleitung in den Vorratsbehälter zurückströmen. Der Injektor weist eine druckgesteuerte Einspritzdüse auf, die selbstständig in Abhängigkeit des Druckes des Reduktionsmittels öffnet und schließt. Der Injektor ist einem Abgastrakt zugeordnet, wobei die vom Abgas im Abgastrakt umspülte Einspritzdüse durch das Reduktionsmittel in der Einspritzdüse gekühlt wird. Das Reduktionsmittel führt die Wärme der Einspritzdüse bei der Abspritzung von Reduktionsmittel und durch die Rückführung von Reduktionsmittel aus der Einspritzdüse in den Vorratsbehälter ab, wobei erhitztes Reduktionsmittel durch kühleres Reduktionsmittel in der Einspritzdüse ersetzt wird. Der Injektor wird an einem Abgasrohr des Abgastraktes befestigt, wobei die Abspritzrichtung des Reduktionsmittels weitgehend mit der Strömungsrichtung der Abgase übereinstimmt. Dazu wird der Injektor schräg und/oder in einer Biegung des Abgasrohrs angeordnet.

Der erfindungsgemäße Injektor zum Dosieren von Reduktionsmittel mit den kennzeichnenden Merkmalen des Anspruchs 1 bzw. das System zum Dosieren von Reduktionsmittel mit den kennzeichnenden Merkmalen des Anspruchs 10 haben demgegenüber den Vorteil, dass die Lage und Ausrichtung der mit dem Düsenhalter über eine Düsenverlängerung verbundenen Einspritzdüse mittels der Düsenverlängerung optimal an den Abgastrakt und die Strömungsverhältnisse des Abgases angepasst werden kann, wobei in der Düsenverlängerung ein Zulaufkanal und ein Rücklaufkanal vorgesehen sind, die parallel zueinander verlaufen.

Vorteilhafterweise ermöglicht der parallel zum Zulaufkanal verlaufende Rücklaufkanal die Kühlung des Zulaufkanals, so dass kühles Reduktionsmittel in der vom heißem Abgas umspülten Düsenverlängerung zu der Einspritzdüse gelangen kann und erhitztes Reduktionsmittel aus der Einspritzdüse über den Rücklaufkanal rückgeführt werden kann, wodurch die Betriebssicherheit des Injektors zum Dosieren von Reduktionsmittel bzw. des Systems zum Dosieren von Reduktionsmittel gesteigert werden kann.

Durch die in den Unteransprüchen aufgeführten Maßnahmen sind vorteilhafte Weiterbildungen und Verbesserungen des im Anspruch 1 angegebenen Injektors zum Dosieren von Reduktionsmittel und des im Anspruch 10 angegebenen Systems zum Dosieren von Reduktionsmittel möglich.

Zur Verbesserung der konstruktiven Ausführung des Injektors und des Systems weist die Düsenverlängerung einen kreisförmigen Querschnitt auf, wobei der Zulaufkanal und der Rücklaufkanal punktsymmetrisch zum Mittelpunkt des kreisförmigen Querschnitts angeordnet sind. Vorteilhaft ist dabei, dass die Düsenverlängerung mit einem kreisförmigen Querschnitt eine einfache und strömungsgünstige Ausformung mit einer kleinen Oberfläche aufweist, so dass der Wärmeeintrag aus dem Abgas in den Injektor gesenkt werden kann, wodurch die Kühlung des Injektors weiter verbessert werden kann.

Zur weiteren Verbesserung der konstruktiven Ausführung des Injektors und des Systems weist die Düsenverlängerung einen ellipsenförmigen Querschnitt auf, wobei der Zulaufkanal und der Rücklaufkanal auf der Hauptachse punktsymmetrisch zum Mittelpunkt des ellipsenförmigen Querschnitts angeordnet sind. Vorteilhaft ist dabei, dass die Düsenverlängerung mit einem ellipsenförmigen Querschnitt eine besonders strömungsgünstige Ausformung mit einer kleinen Oberfläche aufweist, so dass der Wärmeeintrag aus dem Abgas in den Injektor gesenkt werden kann, wodurch die Kühlung des Injektors weiter verbessert werden kann.

Zur weiteren Verbesserung der konstruktiven Ausführung des Injektors und des Systems ist der Rücklaufkanal gegen die Strömungsrichtung des Abgases gerichtet. Vorteilhafterweise trifft das durch den Abgastrakt strömende Abgas auf die den Rücklaufkanal führenden Seite der Düsenverlängerung, so dass der Wärmeeintrag aus dem Abgas in den Injektor mittels des über den Rücklaufkanal aus der Einspritzdüse rückströmenden Reduktionsmittels aus dem Injektor abgeführt werden kann, wodurch die Kühlung des Injektors weiter verbessert werden kann.

Zur weiteren Verbesserung der konstruktiven Ausführung des Injektors und des Systems weist die Düsenverlängerung und/oder die Einspritzdüse ein Hitzeschild in Form einer Halbschale auf, das dem Abgas entgegensteht. Vorteilhafterweise lenkt das Hitzeschild das auf die Düsenverlängerung und/oder die Einspritzdüse strömende Abgas an der Düsenverlängerung und/oder der Einspritzdüse vorbei, so dass das heiße Abgas nicht direkt auf die Düsenverlängerung und/oder die Einspritzdüse treffen kann, wodurch die Kühlung des Injektors weiter verbessert werden kann.

Zur weiteren Verbesserung der konstruktiven Ausführung des Injektors und des Systems sind die Düsenverlängerung und/oder die Einspritzdüse zumindest teilweise von einem Schutzrohr umschlossen. Vorteilhafterweise lenkt das Schutzrohr das auf die Düsenverlängerung und/oder die Einspritzdüse strömende Abgas an der Düsenverlängerung und/oder der Einspritzdüse vorbei, so dass das auf den Injektor zuströmende Abgas nicht direkt auf die Düsenverlängerung und/oder die Einspritzdüse treffen kann, wodurch die Kühlung des Injektors weiter verbessert werden kann.

Zur weiteren Verbesserung der konstruktiven Ausführung des Injektors und des Systems sind die Düsenverlängerung und/oder die Einspritzdüse zumindest teilweise von einer Isolationsschicht bedeckt. Vorteilhafterweise verhindert die Isolation einen Wärmeeintrag aus dem Abgas in die durch die Isolationsschicht bedeckten Bereiche der Düsenverlängerung und/oder der Einspritzdüse, wodurch die Kühlung des Injektors weiter verbessert werden kann.

Zur weiteren Verbesserung der konstruktiven Ausführung des Injektors und des Systems ist die Düsenverlängerung gekrümmt bzw. gebogen ausgeführt. Vorteilhafterweise kann die Einspritzdüse optimal im Abgastrakt bzw. im Abgasrohr ausgerichtet werden, so dass das von der Einspritzdüse abgespritzte Reduktionsmittel effektiv in den Abgasstrom eingebracht werden kann, wodurch der Wirkungsgrad des Injektors zum Dosieren von Reduktionsmittel bzw. des Systems zum Dosieren von Reduktionsmittel gesteigert werden kann.

Weitere Merkmale und Merkmalskombinationen ergeben sich aus der Beschreibung sowie den Zeichnungen. Ein Ausführungsbeispiel der Erfindung ist in den Zeichnungen vereinfacht dargestellt und in der nachfolgenden Beschreibung näher erläutert.

Dabei zeigen:
- Fig. 1: eine schematisch vereinfachte Schnittdarstellung eines Injektors zum Dosieren von Reduktionsmittel,
- Fig. 2: einen kreisförmigen Querschnitt einer Düsenverlängerung des Injektors und
- Fig. 3: einen ellipsenförmigen Querschnitt der Düsenverlängerung des Injektors.

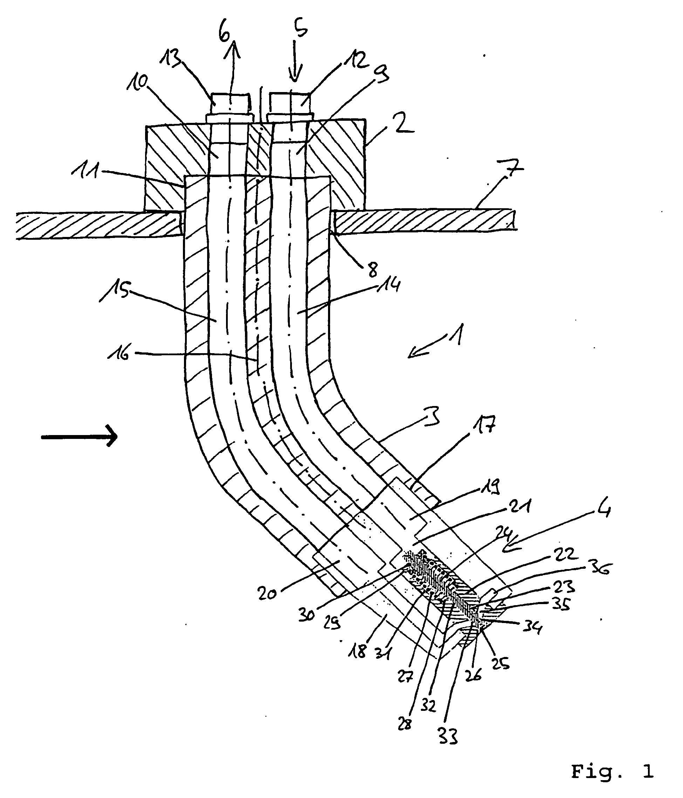

In der Fig. 1 ist ein Ausschnitt eines Injektors zum Dosieren von Reduktionsmittel bzw. ein System zum Dosieren von Reduktionsmittel zum Abgas einer Brennkraftmaschine gezeigt, der mit einem Injektor 1 ausgestattet ist, der in einem Längsschnitt dargestellt ist. Der Injektor 1 weist drei wesentliche Elemente, einen Düsenhalter 2, eine Düsenverlängerung 3 und eine Einspritzdüse 4, auf. Die Einspritzdüse 4 ist über die Düsenverlängerung 3 mit dem Düsenhalter 2 verbunden. Die Vorrichtung zum Dosieren von Reduktionsmittel, das insbesondere in Form einer wässrigen Harnstofflösung vorliegt, welches in einen nicht näher dargestelltem Abgastrakt einer Brennkraftmaschine, insbesondere einer Dieselbrennkraftmaschine, abgegeben wird, umfasst den dem Abgastrakt zugeordneten Injektor 1. Über eine nicht näher dargestellte Zulaufleitung 5 gelangt das Reduktionsmittel aus einem nicht gezeigten Vorratsbehälter mittels einer nicht gezeigten Dosierpumpe zum Injektor 1. Das Reduktionsmittel kann aus dem Injektor 1 über eine nicht näher dargestellte Rücklaufleitung 6 in den Vorratsbehälter zurückströmen, so dass die Einspritzdüse 4 und die Düsenverlängerung 3 von Reduktionsmittel durchströmt werden können, um so die zumindest teilweise in den Abgastrakt ragende und vom Abgas umspülte Düsenverlängerung 3 und Einspritzdüse 4 zu kühlen.

Die Einspritzdüse 4 ist federbelastet ausgeführt, d.h. die Einspritzdüse 4 öffnet bzw. schließt selbsttätig in Abhängigkeit vom Druck des Reduktionsmittels. Der Druck des Reduktionsmittels im Injektor 1 kann mit einem nicht gezeigten Rücklaufventil in der Rücklaufleitung 6 gesteuert werden, indem zur Drucksteigerung des Reduktionsmittels in der Einspritzdüse 4 das Rücklaufventil geschlossen wird. Übersteigt der von der Dosierpumpe aufgebaute Druck des Reduktionsmittels einen Öffnungsdruck der Einspritzdüse 4, öffnet die im Abgastrakt vorgesehene Einspritzdüse 4 und spritzt Reduktionsmittel ins Abgas im Abgastrakt der Brennkraftmaschine ab. Das Reduktionsmittel gelangt mit dem Abgas zu einem nicht gezeigten Stickoxidreduktionskatalysator, der vorzugsweise als sogenannter SCR-Katalysator zur selektiven Reduktion von im Abgas des Dieselmotors enthaltenen Stickoxiden (NOx) ausgeführt ist.

Über den Düsenhalter 2 ist der Injektor 1 an ein Abgasrohr 7 des Abgastraktes angebracht. Dabei ragt die Düsenverlängerung 3 mit der Einspritzdüse 4 durch eine Öffnung 8 im Abgasrohr 7 in das Abgasrohr 7 hinein. Der Düsenhalter 2 weist einen Zulauf 9, einen Rücklauf 10 und eine Aufnahmeöffnung 11 für die Düsenverlängerung 3 auf. Der Zulauf 9 und der Rücklauf 10 im Düsenhalter 2 sind vorzugsweise als Bohrungen ausgeführt. Im Zulauf 9 und im Rücklauf 10 sind jeweils ein Zulaufstutzen 12 und ein Rücklaufstutzen 13 flüssigkeitsdicht eingesetzt. An den Zulauf- bzw. Rücklaufstutzen 12, 13 sind jeweils die Zulauf- bzw. Rücklaufleitungen 5, 6 der Vorrichtung zum Dosieren von Reduktionsmittel angeschlossen. Die Zulauf- bzw. Rücklaufstutzen 12, 13 werden in den Zulauf- bzw. Rücklauf 9, 10 verpresst oder mittels nicht gezeigten Gewinde eingeschraubt. Im Ausführungsbeispiel gemäß Fig. 1 sind der Zulaufstutzen 12 und der Rücklaufstutzen 13 parallel nebeneinander liegend auf der der Düsenverlängerung 3 abgewandten Seite am Düsenhalter 2 vorgesehen. Selbstverständlich können der Zulaufstutzen 12 und der Rücklaufstutzen 13 in anderen Positionen zueinander und/oder zum Düsenhalter 2 bzw. zur Düsenverlängerung 3 vorgesehen werden. Der Zulauf bzw. Rücklauf 9, 10 sind jeweils mit einem Zulaufkanal 14 und einem Rücklaufkanal 15 der Düsenverlängerung 3 verbunden. Dazu wird die Düsenverlängerung 3 flüssigkeitsdicht in der Aufnahmebohrung 11 gehalten, so dass der Zulauf 9 und der Zulaufkanal 14 und der Rücklauf 10 und der Rücklaufkanal 15 jeweils miteinander fluchten. Der Zulaufkanal 14 und der Rücklaufkanal 15 verlaufen parallel zueinander in der Düsenverlängerung 3 und sind durch eine in der Düsenverlängerung 3 liegenden Wand 16 voneinander getrennt.

Die Düsenverlängerung 3 weist an ihrem dem Düsenhalter 2 gegenüberliegenden Ende eine Düsenaufnahme 17 auf. In der Düsenaufnahme 17 ist die Einspritzdüse 4 über ihren Düsenkörper 18 flüssigkeitsdicht gehalten, so dass ein Zulauf 19 im Düsenkörper 18 der Einspritzdüse 4 mit dem Zulaufkanal 14 der Düsenverlängerung 3 und ein Rücklauf 20 im Düsenkörper 18 der Einspritzdüse 4 mit dem Rücklaufkanal 15 der Düsenverlängerung 3 jeweils miteinander fluchten. Der Zulauf 19 und der Rücklauf 20 im Düsenkörper sind vorzugsweise als Bohrungen ausgeführt. Der Zulauf 19 geht in einen Düsenraum 21 über, in dem ein Düsenelement 22 aufgenommen ist. Im Düsenelement 22 ist in einer Ventilbohrung 23 ein Ventilelement 24 längsverschiebbar aufgenommen. Die Ventilbohrung 23 erweitert sich am abgasseitigen Ende des Düsenelements 22 kegelförmig und bildet zusammen mit einem Ventilteller 25 des Ventilelements 24 einen Dichtsitz 26. Der Ventilteller 25 wird mittels einer Düsenfeder 27 in den Dichtsitz 26 gedrückt. Dazu stützt sich die Düsenfeder 27 an einem dem Düsenraum 21 zugewandten Widerlager 28 am Düsenelement 22 ab und wird mittels eines an Ventilelement 24 angebrachten Federtellers 29 vorgespannt. Der Federteller 29 wird mittels einer geeigneten Keilverbindung, insbesondere eines Sprengrings 30, auf dem Ventilelement 24 gehalten. In der Zeichnung ist das Ventilelement 24 in seiner Schließstellung dargestellt. In dem Ausführungsbeispiel gemäß Fig. 1 ist der Boden eins Sacklochs als Widerlager 28 vorgesehen, wobei die Düsenfeder 27 zumindest teilweise in der vom Sackloch gebildeten einer Federkammer 31 aufgenommen ist, wodurch Baulänge der Einspritzdüse 4 eingespart werden kann. Denkbar ist auch, dass der Düsenkörper 18 und das im Düsenraum 21 des Düsenkörpers 18 aufgenommene Düsenelement 22 einstückig in einem einzigen Bauteil ausgebildet sind.

Das Reduktionsmittel gelangt aus dem Düsenraum 21 über die Federkammer 31 zur Ventilbohrung 23 und strömt in mindestens einer im Ventilelement 24 ausgesparten Längsnut 32 durch die Ventilbohrung 23 in einem dem Ventilteller 25 vorgelagerten Ringraum 33. Eine umlaufende Quernut 34 am Ventilelement 24 bildet den Ringraum 33. Der Ringraum 33 ist über eine oder mehrere Querbohrungen 35 im Düsenelement 22 mit einer Ringnut 36 im Düsenkörper 18 verbunden, so dass das Reduktionsmittel über die Querbohrungen 35 aus dem Ringraum 33 in die Ringnut 36 strömen kann. Aus der Ringnut 36 strömt das Reduktionsmittel weiter zur Rücklaufbohrung 20 des Düsenkörpers 18. Übersteigt ein Druck des Reduktionsmittels einen Öffnungsdruck der Einspritzdüse 4, öffnet das Ventilelement 24, wobei der Ventilteller 25 vom Dichtsitz 26 abhebt, und der Injektor 1 spritzt Reduktionsmittel ab. Vorteilhafterweise wird die Einspritzdüse 4 permanent von Reduktionsmittel durchströmt, so dass erhitztes Reduktionsmittel durch kühleres Reduktionsmittel ersetzt wird, wodurch die Einspritzdüse 4 im besonderen Maße gekühlt werden kann.

Um eine effektive Einbringung eines Reduktionsmittels in das Abgas im Abgastrakt der Brennkraftmaschine sicherzustellen, ist es bei dem erfindungsgemäßen Injektor zum Dosieren von Reduktionsmittel vorgesehen, über die Düsenverlängerung 3 die Einspritzdüse 4 des Injektors 1 im Abgasrohr 7 des Abgastraktes der Brennkraftmaschine im Abgasstrom zu positionieren. Dies ermöglicht die Lage und die Ausrichtung der Einspritzdüse 4 optimal an den Abgastrakt und die Strömungsverhältnisse des Abgases im Abgastrakt anzupassen. In der Fig. 1 ist die Düsenverlängerung 3 in einem etwa 45°-Grad Winkel in Richtung der Strömungsrichtung des Abgases, durch den Pfeil symbolisiert, gekrümmt bzw. gebogen ausgeführt, so dass die Abspritzung von Reduktionsmittel aus der Einspritzdüse 4 etwa in einem 45°-Winkel mit dem Abgasstrom erfolgt. Selbstverständlich sind auch andere Winkel und Ausrichtungen der Einspritzdüse 4 zur Strömungsrichtung des Abgases denkbar. Von Vorteil ist auch, das neben dem Zulaufkanal 14 der parallel zum Zulaufkanal 14 verlaufende Rücklaufkanal 15 in der Düsenverlängerung 3 vorgesehen ist, so dass die vom heißem Abgas umspülte Düsenverlängerung 3 gekühlt werden kann, indem die Wärme aus der Düsenverlängerung 3 mit dem in den Vorratsbehälter rückströmenden Reduktionsmittel aus der Düsenverlängerung 3 über den Rücklaufkanal 15 abgeführt werden kann.

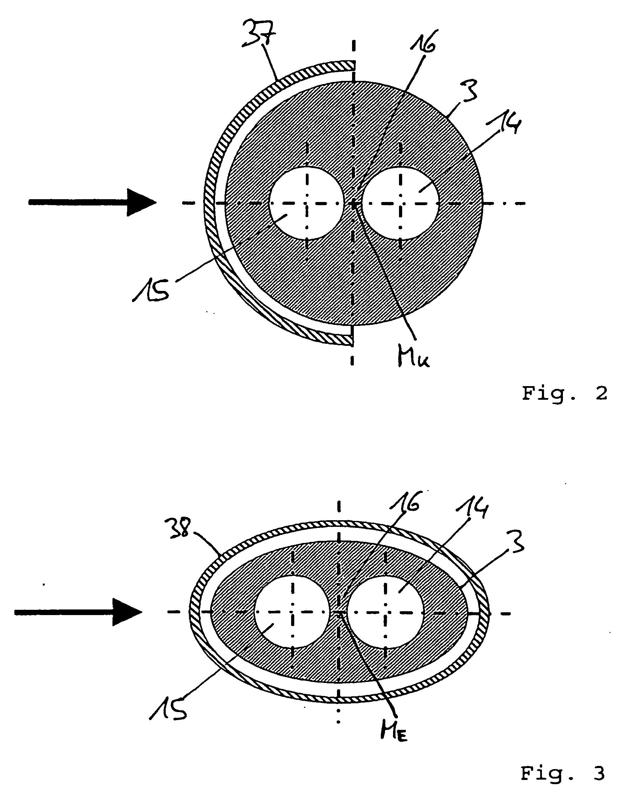

Die Fig. 2 zeigt einen kreisförmigen Querschnittsverlauf der Düsenverlängerung 3, bei dem der Zulaufkanal 14 und der Rücklaufkanal 15 punktsymmetrisch zum Mittelpunkt M_{K} des kreisförmigen Querschnitts angeordnet sind. Der Zulauf- und Rücklaufkanals 14, 15 sind durch die Wand 16 voneinander getrennt und verlaufen parallel zueinander. Vorteilhafterweise kann mittels der punktsymmetrischen und parallelen Anordnung des Zulauf- und Rücklaufkanals 14, 15 zueinander ein gleichmäßiger Wärmeeintrag aus dem Abgas in den Zulauf- und Rücklaufkanal 14, 15 erreicht werden, so dass örtliche Temperaturspitzen in der Düsenverlängerung 3 vermieden werden können, wodurch Ausscheidungen bzw. Ablagerungen aus dem Reduktionsmittels durch örtliches Sieden des Reduktionsmittels in der Düsenverlängerung 3 vermieden werden können.

Der in der Fig. 3 gezeigte Querschnitt der Düsenverlängerung 3 ist eine Abwandlung der Fig. 2 und vorteilhafterweise ellipsenförmig ausgeführt, wodurch die Düsenverlängerung 3 einen besonders strömungsgünstigen Querschnittsverlauf aufweist und die Oberfläche der Düsenverlängerung 3 weiter verkleinert ist. Damit ist es möglich, den Wärmeeintrag aus dem Abgas in die Düsenverlängerung 3 weiter zu senken. Der Zulauf- und Rücklaufkanal 14, 15 sind entsprechend dem Ausführungsbeispiel gemäß der Fig. 2 punktsymmetrisch um den Mittelpunkt M_{E} auf der Hauptachse des ellipsenförmigen Querschnitts angeordnet. Der Zulaufkanal 14 und der Rücklaufkanal 15 weisen gemäß den Figuren 1 bis 3 einen kreisförmigen Querschnitt auf, wobei auch andere Ausformungen der Querschnitte des Zulauf- und Rücklaufkanals 14, 15 denkbar sind.

Um den Wärmeeintrag in den Zulaufkanal 14 und damit in die Einspritzdüse 4 weiter zu senken, erfolgt die Ausrichtung des Rücklaufkanals 15 entgegen der Strömungsrichtung, die in den Figuren 1 bis 3 durch die Pfeile symbolisiert wird. Damit trifft das durch den Abgastrakt strömende Abgas zuerst auf die den Rücklaufkanal 15 führende Seite der Düsenverlängerung 3. Dies hat zur Folge, dass der Wärmeeintrag aus dem Abgas in die Düsenverlängerung 3 mittels des durch den Rücklaufkanal 15 strömenden Reduktionsmittels aus dem Injektor 1 transportiert wird, wodurch sich der Wärmeeintrag aus dem Abgases in den Zulaufkanal 14 verringert.

Ein weiteres Senken des Wärmeeintrags in die Düsenverlängerung 3 kann durch ein Hitzeschild 37 in Form einer Halbschale erfolgen, wobei das Hitzeschild 37 entgegen der Strömungsrichtung des Abgases ausgerichtet ist. In der Fig. 2 ist ein halbschalenförmiges Hitzeschild 37 gezeigt. Das Hitzeschild 37 ist mit geeigneten Mitteln am Injektor 1 angebracht und kann sich über die gesamte Länge der Düsenverlängerung 3 und der Einsprituzdüse 4 erstrecken, wobei das Hitzeschild 37 von der Düsenverlängerung 3 und/oder von der Einspritzdüse 4 selbst beabstandet ist.
Vorteilhafterweise leitet das Hitzeschild 37 das anströmende Abgas an der Düsenverlängerung 3 und/oder Einspritzdüse 4 vorbei, so dass der Wärmeeintrag aus dem Abgas in die Düsenverlängerung 3 und/oder die Einspritzdüse 4 verringert wird, wodurch sich die Kühlung des Injektors 1 verbessert. Alternativ dazu können die Düsenverlängerung 3 und/oder die Einspritzdüse 4 von einem Schutzrohr 38 umschlossen sein. Die Fig. 3 zeigt die Düsenverlängerung 3 mit einem Schutzrohr 38, wobei das Schutzrohr 38 von der Düsenverlängerung 3 und/oder von der Einspritzdüse 4 beabstandet ist. Denkbar ist auch, eine nicht dargestellte Isolation der Düsenverlängerung 3 und/oder der Einspritzdüse 4 vorzusehen. Die Isolation ist in Form einer Isolationsschicht geeigneter Wärmedämmstoffe ausgeführt und bedeckt zumindest teilweise die Düsenverlängerung 3 und/oder der Einspritzdüse 4. Vorteilhafterweise verhindert die Isolation einen Wärmeeintrag aus dem Abgas in die durch die Isolationsschicht bedeckten Bereiche der Düsenverlängerung 3 bzw. der Einspritzdüse 4. Denkbar ist auch eine Kombination des Hitzschilds 37 mit der Isolation bzw. des Schutzrohrs 38 mit der Isolation, wobei die Isolationsschicht zwischen dem Hitzschild 37 bzw. dem Schutzrohr 38 und der Düsenverlängerung 3 und/oder der Einspritzdüse 4 angeordnet wird. Die Verwendung eines Hitzeschildes 37 und/oder einer Isolation bzw. eines Schutzrohrs 38 und/oder einer Isolation ist von der Ausformung bzw. des Querschnitts der Düsenverlängerung 3 und/oder der Einspritzdüse 4 unabhängig, so dass eine geeignete Schutzvorrichtung entsprechend den Strömungsverhältnissen und der Ausformung des Abgastraktes gewählt werden kann.

Der erfindungsgemäße Injektor zum Dosieren von Reduktionsmittel bzw. erfindungsgemäße System zum Dosieren von Reduktionsmittel weist einen einfach ausgebauten Injektor 1 auf, der mittels der Düsenverlängerung 3 einfach an die Strömungsverhältnisse und konstruktiven Ausformungen des Abgastraktes der Brennkraftmaschine angepasst werden kann, wodurch bei einer effektiven Kühlung des Injektors 1 eine zielgenaue Einbringung des Reduktionsmittels in das Abgas der Brennkraftmaschine erreicht werden kann.

## Patentansprüche

1. Injektor (1) zum Dosieren von Reduktionsmittel,
von dem das Reduktionsmittel, insbesondere eine wässrige Harnstofflösung, in einen Abgastrakt einer Brennkraftmaschine, insbesondere einer Dieselbrennkraftmaschine, abgebbar ist und dem das Reduktionsmittel aus einem Vorratsbehälter über einen Zulauf (9) mittels einer Dosierpumpe zuführbar ist und von dem das Reduktionsmittel über einen Rücklauf (10) in den Vorratsbehälter rückführbar ist,
wobei der Injektor (1) einen Düsenhalter (2) umfasst, und mittels des Düsenhalters (2) an einem Abgasrohr (7) des Abgastraktes anbringbar ist, und wobei eine federbelastete Einspritzdüse (4) des Injektors (1) sich selbsttätig durch den Druck des Reduktionsmittels öffnen kann, um das Reduktionsmittel in den Abgastrakt abzuspritzen,
**dadurch gekennzeichnet,**
**dass** die Einspritzdüse (4) über eine Düsenverlängerung (3) mit dem Düsenhalter (2) verbunden ist, und
**dass** in der Düsenverlängerung (3) ein Zulaufkanal (14) und ein Rücklaufkanal (15) vorgesehen sind, die parallel zueinander verlaufen.

2. Injektor nach Anspruch 1, wobei die Düsenverlängerung (3) einen kreisförmigen Querschnitt aufweist und der Zulaufkanal (14) und der Rücklaufkanal (15) punktsymmetrisch zum Mittelpunkt (MK) des kreisförmigen Querschnitts angeordnet sind.

3. Injektor nach Anspruch 1, wobei die Düsenverlängerung (3) einen ellipsenförmigen Querschnitt aufweist und der Zulaufkanal (14) und der Rücklaufkanal (15) auf der Hauptachse punktsymmetrisch zum Mittelpunkt (ME) des ellipsenförmigen Querschnitts angeordnet sind.

4. Injektor nach einem der Ansprüche 1 bis 3, wobei der Rücklaufkanal (15) gegen die Strömungsrichtung des Abgases gerichtet ist.

5. Injektor nach einem der Ansprüche 1 bis 4, wobei die Düsenverlängerung (3) und/oder die Einspritzdüse (4) ein Hitzeschild (37) in Form einer Halbschale aufweist, das dem Abgas entgegensteht.

6. Injektor nach einem der Ansprüche 1 bis 4, wobei die Düsenverlängerung (3) und/oder die Einspritzdüse (4) zumindest teilweise von einem Schutzrohr (38) umschlossen sind.

7. Injektor nach einem der Ansprüche 1 bis 6, wobei die Düsenverlängerung (3) und/oder die Einspritzdüse (4) zumindest teilweise von einer Isolationsschicht bedeckt sind.

8. Injektor nach einem der Ansprüche 1 bis 7, wobei die Düsenverlängerung (3) gekrümmt oder gebogen ausgeführt ist.

9. Injektor nach einem der Ansprüche 1 bis 8, wobei die Düsenverlängerung (3) so gebogen ist, dass sie einen Winkel von 45°einschließt.

10. System zum Dosieren von Reduktionsmittel, insbesondere einer wässrigen Harnstofflösung, in einen Abgastrakt einer Brennkraftmaschine, insbesondere einer Dieselbrennkraftmaschine, wobei das System umfasst:
den Injektor nach einem der Ansprüche 1 bis 9;
den Vorratsbehälter für das Reduktionsmittel;
eine den Vorratsbehälter und den Zulauf (9) des Injektors (1) verbindende Zulaufleitung (5);
die Dosierpumpe, wobei die Dosierpumpe in der Zulaufleitung (5) angeordnet ist; und
eine den Rücklauf (10) des Injektors (1) und den Vorratsbehälter verbindende Rücklaufleitung (6).

11. System nach Anspruch 10, weiter umfassend ein in der Rücklaufleitung (6) angeordnetes Rücklaufventil.

12. System nach Anspruch 10 oder 11, weiter umfassend einen im Abgastrakt stromabwärts des Injektors (1) anordenbaren Stickoxidreduktionskatalysator.

## Claims

1. An injector (1) for metering a reducing agent, from which injector the reducing agent, in particular an aqueous urea solution, can be supplied into an exhaust system of an internal combustion engine, in particular a diesel internal combustion engine, and to which injector the reducing agent can be supplied from a reservoir, via an inlet (9), by means of a metering pump and from which injector the reducing agent can be returned via a return (10) into the reservoir,
wherein the injector (1) comprises a nozzle holder (2) and is configured to be mounted, by means of the nozzle holder (2), to an exhaust pipe (7) of the exhaust system, and
wherein a spring-loaded injection nozzle (4) of the injector (1) is capable to open automatically under the pressure exerted by the reducing agent to eject the reducing agent into the exhaust system,
**characterized in that**
the injection nozzle (4) is connected to the nozzle holder (2) through a nozzle extension (3), and
**in that** an inlet conduit (14) and a return conduit (15) extending parallel to each other are provided in the nozzle extension (3).

2. The injector according to claim 1, wherein the nozzle extension (3) has a circular cross-section and the inlet conduit (14) and the return conduit (15) are arranged point-symmetrically to the center (MK) of the circular cross-section.

3. The injector according to claim 1, wherein the nozzle extension (3) has an elliptical cross-section and the inlet conduit (14) and the return conduit (15) are arranged on the main axis point-symmetrically to the center (ME) of the elliptical cross-section.

4. The injector according to one of claims 1 to 3, wherein the return conduit (15) is directed against the direction of flow of the exhaust gas.

5. The injector according to one of claims 1 to 4, wherein the nozzle extension (3) and/or the injection nozzle (4) comprises a heat shield (37) in the form of a half-shell confronting the exhaust gas.

6. The injector according to one of claims 1 to 4, wherein the nozzle extension (3) and/or the injection nozzle (4) is enclosed at least partially by a protective tube (38).

7. The injector according to one of claims 1 to 6, wherein the nozzle extension (3) and/or the injection nozzle (4) is covered at least partially by an insulating layer.

8. The injector according to one of claims 1 to 7, wherein the nozzle extension (3) is of curved or bent configuration.

9. The injector according to one of claims 1 to 8, wherein the nozzle extension (3) is bent such that it encloses an angle of 45°.

10. A system for metering a reducing agent, in particular an aqueous urea solution, into an exhaust system of an internal combustion engine, in particular a diesel internal combustion engine, wherein the system comprising:
the injector according to one of claims 1 to 9;
the reservoir for the reducing agent;
an inlet line (5) connecting the reservoir and the inlet (9) of the injector (1);
the metering pump which is arranged in the inlet line (5); and
a return line (6) connecting the return (10) of the injector (1) and the reservoir.

11. The system according to claim 10, further comprising a return valve disposed in the return line (6).

12. The system according to claim 10 or 11, further comprising a nitrogen oxide reducing catalyst disposable in the exhaust system downstream of the injector (1).

## Revendications

1. Injecteur (1) pour le dosage d'un réducteur, duquel le réducteur, en particulier une solution d'urée aqueuse, peut être envoyé dans un secteur à gaz d'échappement d'un moteur à combustion interne, en particulier d'un moteur Diesel, et auquel le réducteur peut être amené au moyen d'une pompe doseuse par l'intermédiaire d'une arrivée (9) à partir d'un réservoir et duquel le réducteur peut être ramené dans le réservoir par l'intermédiaire d'un retour (10),
l'injecteur (1) comprenant un porte-buse (2) et pouvant être monté au moyen du porte-buse (2) sur un tuyau à gaz d'échappement (7) du secteur à gaz d'échappement, et une buse d'injection (4) à ressort de l'injecteur (1) pouvant s'ouvrir automatiquement par la pression du réducteur pour injecter le réducteur dans le secteur à gaz d'échappement,
**caractérisé en ce que**
la buse d'injection (4) est reliée au porte-buse (2) par l'intermédiaire d'une rallonge de buse (3), et qu'un conduit d'arrivée (14) et un conduit de retour (15) sont prévus dans la rallonge de buse (3), lesquels conduits s'étendent parallèlement l'un à l'autre.

2. Injecteur suivant la revendication 1, dans lequel la rallonge de buse (3) présente une section transversale circulaire et le conduit d'arrivée (14) et le conduit de retour (15) sont disposés en symétrie ponctuelle par rapport au centre (MK) de la section transversale circulaire.

3. Injecteur suivant la revendication 1, dans lequel la rallonge de buse (3) présente une section transversale elliptique et le conduit d'arrivée (14) et le conduit de retour (15) sont disposés sur l'axe principal en symétrie ponctuelle par rapport au centre (ME) de la section transversale elliptique.

4. Injecteur suivant l'une des revendications 1 à 3, dans lequel le conduit de retour (15) est orienté à l'encontre de la direction d'écoulement des gaz d'échappement.

5. Injecteur suivant l'une des revendications 1 à 4, dans lequel la rallonge de buse (3) et/ou la buse d'injection (4) présentent un écran thermique (37) en forme de demi-coque, lequel s'oppose aux gaz d'échappement.

6. Injecteur suivant l'une des revendications 1 à 4, dans lequel la rallonge de buse (3) et/ou la buse d'injection (4) sont entourées, au moins en partie, par un tuyau de protection (38).

7. Injecteur suivant l'une des revendications 1 à 6, dans lequel la rallonge de buse (3) et/ou la buse d'injection (4) sont recouvertes, au moins en partie, d'une couche d'isolation.

8. Injecteur suivant l'une des revendications 1 à 7, dans lequel la rallonge de buse (3) présente une réalisation cintrée ou pliée.

9. Injecteur suivant l'une des revendications 1 à 8, dans lequel la rallonge de buse (3) est pliée de sorte qu'elle forme un angle de 45°.

10. Système pour le dosage de réducteur, en particulier d'une solution d'urée aqueuse, dans un secteur à gaz d'échappement d'un moteur à combustion interne, en particulier d'un moteur Diesel, le système comprenant :
l'injecteur suivant l'une des revendications 1 à 9 ;
le réservoir pour le réducteur ;
une conduite d'arrivée (5) reliant le réservoir et l'arrivée (9) de l'injecteur (1) ;
la pompe de dosage, la pompe étant disposée dans la conduite d'arrivée (5) ; et
une conduite de retour (6) reliant le retour (10) de l'injecteur (1) et le réservoir.

11. Système suivant la revendication 10, comprenant en outre une vanne anti-retour disposée dans la conduite de retour (6).

12. Système suivant l'une des revendications 10 et 11, comprenant en outre un catalyseur de réduction des oxydes d'azote qui peut être monté dans le secteur à gaz d'échappement en aval de l'injecteur (1).
